# EUROPEAN PATENT APPLICATION

(11) **EP 4 722 530 A1**
(43) Date of publication of application: **08.04.2026**
(21) Application number: 25206415.9
(22) Date of filing: 02.10.2025
(51) Int. Cl.: F03D 13/10, B66C 1/10, F03D 80/50

(54) **TRIMMING DEVICE FOR TRIMMING A PREFABRICATED ROUND ROOT COMPONENT AND METHOD FOR MANUFACTURING A ROUND ROOT COMPONENT**

(30) Priority: 04.10.2024 IN 202441075276
(71) Applicant: Nordex Energy SE & Co. KG, 22419 Hamburg (DE)
(72) Inventor: Jadhav, Jagdish, 560001 Bangalore (IN)
(74) Representative: Völkl Siebenson Patentanwälte - Partnerschaft mbB

(57) **Abstract**

The invention concerns a trimming device (300) for trimming a prefabricated round root component (200) for a wind turbine rotor blade (110), comprising
- a support structure (302),
- a table (308), the table (308) being
- rotatably supported on the support structure (302),
and
- configured to support the prefabricated round root component (200),

- a trimming tool (320), the trimming tool (320) being fixed to the support structure (302) and being configured to trim the round root component (200) along its periphery (204) when the round root component (200) is supported on the table (308), in particular to remove excess material.

The invention also concerns a method.

## Description

The invention concerns a trimming device. The invention also concerns a method of manufacturing a round root component.

Wind turbines with wind turbine rotor blades are widely known from the state of the art and are used to convert wind energy into electrical energy for supply to the electrical grid. Wind turbines of this kind generally comprise a rotor with a rotor hub and a plurality of wind turbine rotor blades.

Wind turbine rotor blades have a root region to be attached to the rotor hub (in particular via a pitch bearing) and a tip portion at an opposite end. The root region of the wind turbine blade usually has a generally round cross-section. Other regions of a wind turbine rotor blade have cross-sections with an aerodynamic profile.

In the area of the root region of the wind turbine rotor blade, typically a round root component, e.g. a round base plate or a root ring, is provided. The round root component is connected, in particular bonded by adhesive, to the inner surface of the shell of the wind turbine rotor blade.

One task underlying the invention is to provide a concept for an efficient and reliable manufacture of such round root component.

This object is solved by the independent claim. Advantageous embodiments are given in the sub-claims.

According to a first aspect, a trimming device is disclosed, the trimming device being configured for trimming a prefabricated round root component of a wind turbine rotor blade. The trimming device comprises a support structure. The trimming device comprises a table. The table is rotatably supported on the support structure. The table is configured to support the prefabricated round root component. The trimming device comprises a trimming tool, the trimming tool being fixed to the support structure and being configured to trim the round root component along its periphery when the round root component is supported on the table, in particular to remove excess material.

The inventive device allows for a particularly easy trimming of the round root component along its periphery. The trimming is performed by the trimming tool, which is fixed on the support structure in a way that it is able to trim along the periphery of the round root component. Due to the rotatable table, the round root component, being arranged on the table, can be rotated, especially while it is being trimmed. This allows, for example, the component to be trimmed evenly along its periphery. Alternatively or additionally, a certain point or region of the component can be trimmed in that the component is rotated in the respective orientation for the trimming tool to trim the round root component selectively.

The inventive trimming device significantly reduces an overall time needed for trimming compared to conventional methods, which involve manual trimming by one or more operators. This leads to an increased productivity and allows operators to focus on other important and critical aspects of their work. Moreover, by minimizing the need for manual trimming, the risk of operator injuries and accidents associated with trimming tools or repetitive motions is greatly reduced or even avoided.

Here and in the following, trimming means the removal of excess material, e.g. production-related material, that is still present after the round root component has been essentially manufactured, i.e. prefabricated. The term prefabricated means that the component needs to be finished at least, i.e. trimmed, in order to fulfill final installation specifications. With regard to the round root component, in particular the periphery needs to be trimmed in order to install the round root component within the root region of the wind turbine rotor blade. The excess material to be removed, for example, is portions of or entire elements like peel plies, vacuum foils or the like.

The round root component is made of fiber composite material. The round root component is a round base plate or round support plate. Alternatively, the round root component is a ring-like component. Being formed as a plate, for example, the round base plate comprises one or more manholes. The plate serves as a reinforcement member for the rotor blade root. Additionally or alternatively, the component serves as a support platform, e.g. for service workers. The round root component typically has a diameter of about 2.5 to 5 m.

The table can be rotated manually, e.g. by an operator, or electrically driven.

The trimming tool, for example, is a disc cutter, a milling tool or a saw for trimming the round root component at its periphery. The trimming tool can also have or combine two or more different tool types, e.g. a saw and a disc cutter.

According to an embodiment, the support structure is a frame, in particular a metal frame. For example, the frame is built from a plurality of webs (also struts, bars). This enables a stable and at the same time lightweight solution.

According to an embodiment, the support structure comprises one or more roller bearings for supporting the table. This means that the comparatively heavy round root components can be securely supported and also rotated, e.g. by hand. Roller bearings provide advantages like low noise, smooth-running, high load capacity. Preferably, the roller bearings are ball transfer units. A ball transfer unit, for example, comprises a housing with an integrated bearing shell, a cover, a load ball and several bearing balls. Particularly, ball transfer units offer high bearing loads at reduced deadweight and size. Further, they ensure a high dirt-resistance, rust-resistance and qualify for simple installation.

According to an embodiment, the roller bearings are provided on webs of the support structure, the webs extending in parallel to a lower surface of the table. For example, the roller bearings are distributed over the webs and mounted thereon. The lower surface of the table can also be defined as the bottom surface and thus means the surface facing the ground, e.g. on which the trimming device stands.

According to an embodiment, the support structure comprises an electric drive which is arranged to rotate the table. The electric drive comprises an electric motor and is connected to the table such that a rotational force (torque) is transferred to the table. For example, the electric drive is located centrally below the table. For example, the electric motor drives a motor shaft that is connected directly or via one or more gear units to the table for its rotation.

According to an embodiment, the table comprises centering means for placing the round root component in a centered manner on an upper surface of the table. The centering means are arranged on the top surface of the table, e.g. the surface facing away from the ground, e.g. on which the trimming device stands. The centering means ensure that the round root component is arranged on the table in a predetermined position.

According to an embodiment, the centering means are one or more markings applied to the table. Thus, the round root component can be centered by means of markings visible to the eye. This provides a simple, easy-to-use centering method.

According to an embodiment, the centering means are one or more protrusions on the table, e.g. on a top surface thereof, for interacting with one or more openings or depressions of or arranged on the round root component. This centers the round root component by means of a form fit between the protrusions and the depressions/openings.

According to an embodiment, the one or more protrusions are adapted for interacting with one or more manholes being provided in the round root component. The manholes, which are present anyway in a round root component which is formed as a plate, can therefore also be used directly for centering.

According to an embodiment, the centering means are one or more depressions or openings being provided in the table, e.g. in the upper surface thereof, for interacting with one or more protrusions of the round root component. We refer to the above functions and advantages, which similarly apply.

According to an embodiment, the table comprises fixation means to hold the round root component in a fixed position on the table. According to an embodiment, the fixation means are designed as one or more clamps, in particular toggle clamps. The fixation means easily and securely lock the component on the table, enabling safe trimming with consistent and high quality.

According to an embodiment, the fixation means is a vacuum device, the vacuum device comprising one or more suction cups and a vacuum pump, the vacuum pump being configured to generate negative pressure for holding the round root component fixedly on the table. For example, the vacuum pump is connected to the one or more suction cups. The suction cups are stationary fixed with respect to the table. When the round root component is placed on the table, the one or more suction cups are arranged at an underside of the round root component. By providing a negative pressure, the suction cups stick to the round root component and hold it in place. The vacuum device allows the round root component to be securely fixed to the table. The vacuum device offers a flexible and practical fixing option, particularly if the design of the table is such that it is not possible to (easily) attach fixing devices (e.g. if the round root component is a massive plate without any manholes).

According to an embodiment, the support structure has a holder on which the trimming tool is arranged and movably guided, in particular in a horizontal direction and/or a vertical direction. The holder, for example, extends vertically with respect to the table, e.g. in parallel to a motor shaft of the electric motor as described above. The trimming tool can be moved along the holder manually or electronically driven, similar to the description above.

According to a second aspect, a method for manufacturing a round root component of a wind turbine rotor blade is disclosed. The method comprises the following steps:
- providing a trimming device according to any one of the above-described embodiments according to the first aspect,
- providing a prefabricated round root component,
- mounting the round root component on the rotatable table of the trimming device,
- rotating the table with the round root component, thereby trimming the round root component at its periphery with the trimming tool.

The method enables the above-mentioned functions and advantages. The above-described embodiments with respect to the first aspect analogously apply to the method.

Mounting the round root component basically means placing the component on the table. Rotating the component can be done manually or electrically.

The method may, in further embodiments, comprise further steps analogous to the above-described features of the first aspect such like:
- moving the trimming tool along the holder as described above,
- centering the round root component with respect to the table,
- fixing the round root component to the table.

Further advantages, features and functions, which are explained in connection with the figures, are given in the following exemplary embodiment of the invention. Identical, similar or similarly acting elements are provided with the same reference signs in the figures.

In the figures:
Figure 1 shows a schematic view of a wind turbine,
Figure 2 shows a schematic view of a rotor blade,
Figure 3 shows a schematic top view of a round root component,
Figure 4 shows a schematic perspective view of a trimming device according to an embodiment of the invention,
Figure 5 shows a schematic perspective view of the trimming device with the round root component,
Figure 6 shows a schematic flow chart of a method according to an embodiment of the invention, and
Figure 7 shows a schematic trimming device according to a further embodiment of the invention.

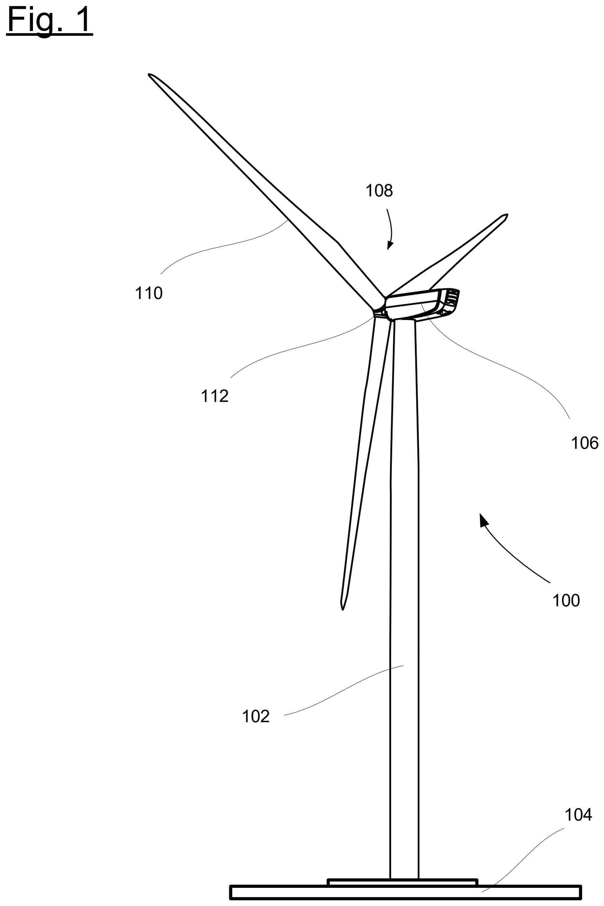

Figure 1 shows a schematic view of a wind turbine 100, which comprises a tower 102. The tower 102 is fixed to the ground by means of a foundation 104. At one end of the tower 102 opposite to the ground a nacelle 106 is rotatably mounted. The nacelle 106, for example, comprises a generator which is coupled to a rotor 108 via a rotor shaft (not shown). The rotor 108 comprises one or more (wind turbine) rotor blades 110, which are arranged on a rotor hub 112.

During operation, the rotor 108 is set in rotation by an air flow, for example wind. This rotational movement is transmitted to the generator via the rotor shaft and, if necessary, a gearbox. The generator converts the mechanical energy of the rotor 108 into electrical energy.

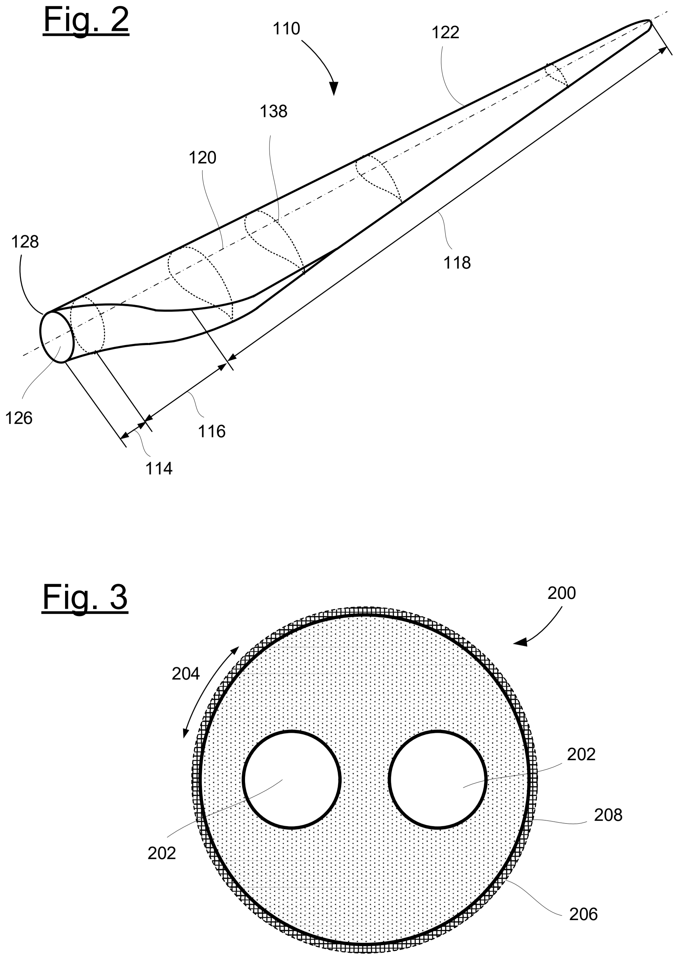

Figure 2 shows an exemplary rotor blade 110. The rotor blade 110 has the shape of a conventional rotor blade and has a rotor blade root region 114 facing the rotor hub 112. The rotor blade root region 114 typically has an essentially circular cross-section. The rotor blade root region 114 is followed by a transition area 116 and a profile area 118 of the rotor blade 110. The rotor blade 110 has a pressure side 122 and an opposite suction side 124 with respect to a longitudinal direction 120 (also main extension direction). The rotor blade 110 is essentially hollow inside. In the rotor blade root region 114 a rotor blade root end 126 with a flange connection 128 is provided, by means of which the rotor blade 110 can be mechanically connected to a pitch bearing or an extender. The rotor blade 110 can be a segmented rotor blade.

In the rotor blade root region 114, typically a round root component is to be installed. Figure 3 shows such round root component 200 being formed as a round base plate. The round root component 200 is made of fiber composite material and, in the present example, comprises two manholes 202.

As already indicated in the introductory portion, during a manufacturing process, the round root component 200 is firstly prefabricated and comprises excess material 206 (indicated in figure 3) along its periphery 204. After prefabrication, the round root component 200 needs to be trimmed, wherein at least the excess material 206 along its periphery 204 is removed to get an intended shape and/or contour for the installation within the wind turbine rotor blade 110. For example, after trimming the round root component 200 has a smooth, circular outer contour 208 along its periphery 204.

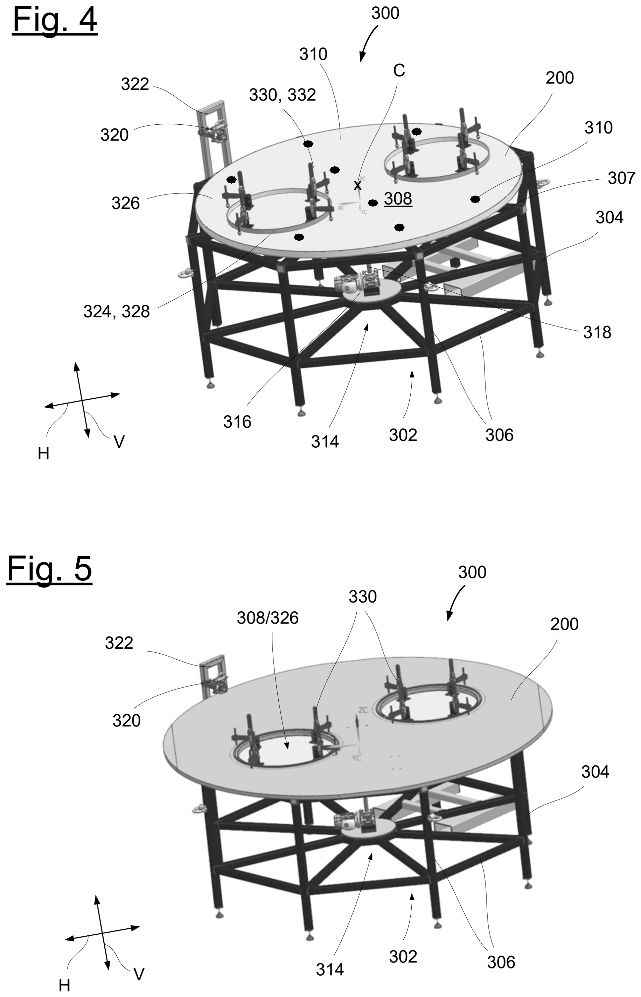

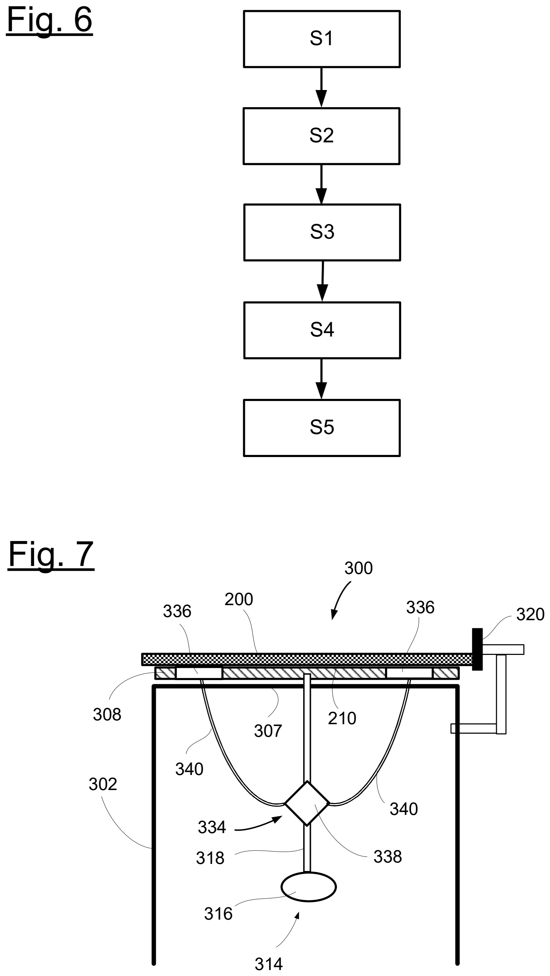

In the following, a method for manufacturing the round root component 200 is described with the help of figures 4 to 6, wherein figures 4 and 5 refer to a trimming device 300 and figure 6 refers to a schematic flowchart of the method.

In a first step S1, a trimming device 300 is provided.

The trimming device 300 as shown in figures 3 and 4 has a support structure 302. The support structure 302 is a frame 304 (or frame-like element) and is built from several, interconnected webs 306.

The trimming device 300 further comprises a table 308, which is rotatably supported on the support structure 302 and configured to support the prefabricated round root component 200. For rotatably support of the table 308, the support structure 302 comprises one or more roller bearings 310, wherein the roller bearings 310 are ball transfer units. The roller bearings 310 are fixed on or integrated in some of the webs 306 of the support structure 302, which webs 306 are upper horizontal webs 307 and extend in parallel to a lower surface 312 of the table 308 (see horizontal direction H in figures 4 and 5). In figure 4, the roller bearings 310 are indicated by dotted lines. As can be seen in the present example, the roller bearings 310 are distributed over the upper horizontal webs 307. Particularly, some of the roller bearings 310 are arranged in an outer region of the support structure 302 with respect to a radial direction originating from a center C of the support structure 302. This ensures that the table 308 can be homogenously supported and avoids bending or tilting of the table 308, especially if the round root component 200 is placed on the table 308. Please note that not all of the bearings 310 are indicated in the figure 4.

It is noted that in non-shown embodiments more or less roller bearings 310 can be used and/or the position of the roller bearings 310 can vary depending on the loads to be supported by the table 308.

In the present example, the support structure 302 comprises an electric drive 314 which is arranged to rotate the table 308. The electric drive 314 comprises an electric (gear) motor 316 and a motor shaft 318. In the shown example, the electric drive 314 is arranged centrally on the support structure 302 below the table 308. The motor shaft 318 extends vertically and is fixedly connected to the table 308 (see vertical direction V in figures 4 and 5). Upon driving the electric motor 316, the motor shaft 318 is rotated and thus is the table 308.

The trimming device 300 further comprises a trimming tool 320. The trimming tool 320 is fixed to the support structure 302 via a holder 322. In the shown example, the trimming tool 320 is movably guided on the holder 322, in particular in the vertical direction V. The trimming tool 320 is a disc cutter, but could also be a saw, a milling tool or the like or combinations thereof. The trimming tool 320 is configured to trim the round root component 200 along its periphery 204 when the round root component 200 is supported on the table 308.

The table 308 comprises centering means 324 for placing the round root component 200 in a centered manner on an upper surface 326 (opposite to the lower surface 312) of the table 308. The centering means 324 are two protrusions 328 on the table 308 for a form-fit interaction with respective manholes 202 being provided in the round root component 200. Here, the protrusions are ring-shaped or circular-shaped.

Further, the table 308 comprises fixation means 330 to hold the round root component 200 in a fixed position on the table 308. Here, the fixation means 330 are designed as one or more clamps 332, in particular toggle clamps (not all instances in figures 4 and 5 referenced).

In a next step S2, the prefabricated round root component 200 as shown in figure 3 is provided.

In a next step S3, the prefabricated round root component 200 is mounted on the upper surface 326 of the rotatable table 308 (see figure 5). The round root component 200 is placed such that the protrusions 328 are inserted at least partially into the manholes such that the round root component 200 is centered on the table 308 and is a predetermined orientation.

In a next step S4, the round root component 200 is fixed to the table 308 by the fixation means 330.

In a next step S5, the table 308 is rotated by actuating the electric drive 314. Thus, the round root component 200 is rotated equally. In this turn, the trimming tool 320 is used and operated to trim the round root component 200 at its periphery 204. Thus, the excess material 206 of the round root component 200 is removed, e.g. cut away.

To trim all of the excess material 206, a position of the trimming tool 320 can be adjusted prior to and/or during the trimming process. In this regard, the trimming tool 320 is moved along the holder 322.

In not-shown embodiments, the holder 322 and the trimming tool 320 can be configured such that the trimming tool 320 can be moved horizontally and vertically along the respective directions H and V.

Figure 7 shows a schematic trimming device 200 according to another embodiment of the invention. The trimming device 200 as shown essentially corresponds to the trimming device as described above with regard to figures 4 and 5. In contrast to above, the fixation means 330 are different. Here, the fixation means 330 is a vacuum device 334. The vacuum device 334 has one or more suction cups 336 and a vacuum pump 338. The vacuum pump 338 is connected to the one or more suction cups 336 via one or more conduits 340. The suction cups 336 are stationary fixed with respect to the table 308. For example, the suction cups 336 are integrated into the table 308 such that they are flush with the upper surface 326 of the table 308. In this setup, no clamps or protrusions are on the table 308.

When the round root component 200 is placed on the table 308, the suction cups 340 thus are arranged at an underside 210 of the round root component 200. By the vacuum pump 338 negative pressure is provided to the suction cups 340 such that they stick to the round root component 200 and hold it fixedly in place on the table.

### Reference signs

- 100: wind turbine
- 102: tower
- 104: foundation
- 106: nacelle
- 108: rotor
- 110: rotor blade
- 112: rotor hub
- 114: rotor blade root region
- 116: transition region
- 118: profile region
- 120: longitudinal direction
- 122: pressure side
- 124: suction side
- 126: rotor blade root end
- 128: flange connection

- 200: round root component
- 202: manhole
- 204: periphery
- 206: excess material
- 208: circular outer contour

- 300: trimming device
- 302: support structure
- 304: frame
- 306: web
- 307: upper horizontal web
- 308: table
- 310: roller bearing
- 312: lower surface
- 314: electric drive
- 316: electric motor
- 318: motor shaft
- 320: trimming tool
- 322: holder
- 324: centering means
- 326: upper surface
- 328: protrusion
- 330: fixation means
- 332: clamp
- 334: vacuum device
- 336: suction cup
- 338: vacuum pump
- 340: conduit

- C: center
- H: horizontal direction
- V: vertical direction

- S1-4: step

## Claims

1. Trimming device (300) for trimming a prefabricated round root component (200) for a wind turbine rotor blade (110), comprising
- a support structure (302),
- a table (308), the table (308) being
- rotatably supported on the support structure (302), and
- configured to support the prefabricated round root component (200),
- a trimming tool (320), the trimming tool (320) being fixed to the support structure (302) and being configured to trim the round root component (200) along its periphery (204) when the round root component (200) is supported on the table (308), in particular to remove excess material.

2. Trimming device (300) according to claim 1, wherein the support structure (302) is a frame (304), in particular a metal frame.

3. Trimming device (300) according to any one of the preceding claims, wherein the support structure (302) comprises one or more roller bearings (310) for supporting the table (308).

4. Trimming device (300) according to claim 3, wherein the roller bearings (310) are ball transfer units.

5. Trimming device (300) according to claim 3 or 4, wherein the roller bearings are provided on webs (306) of the support structure (302), the webs (306) extending in parallel to a lower surface (312) of the table (308).

6. Trimming device (300) according to any one of the preceding claims, wherein the support structure (302) comprises an electric drive (314) which is arranged to rotate the table (308).

7. Trimming device (300) according to any one of the preceding claims, wherein the table (308) comprises centering means (324) for placing the round root component (200) in a centered manner on an upper surface (326) of the table (308).

8. Trimming device (300) according to claim 7, wherein the centering means (324) are one or more markings applied to the table (308).

9. Trimming device (300) according to claim 7, wherein the centering means (324) are one or more protrusions (328) on the table (308) for interacting with one or more openings or depressions of the round root component (200).

10. Trimming device (300) according to claim 9, wherein the one or more protrusions (328) are adapted for interacting with one or more manholes (202) being provided in the round root component (200).

11. Trimming device (300) according to any one of the preceding claims, wherein the table (308) comprises fixation means (330) to hold the round root component (200) in a fixed position on the table (308).

12. Trimming device (300) according to claim 11, wherein the fixation means (330) are designed as one or more clamps (332), in particular toggle clamps.

13. Trimming device (300) according to claim 12, wherein the fixation means (330) is as a vacuum device (334), the vacuum device (334) comprising one or more suction cups (336) and a vacuum pump (338), the vacuum pump (338) being configured to generate negative pressure for holding the round root component (200) fixedly on the table (308).

14. Trimming device (300) according to any one of the preceding claims, wherein the support structure (302) has a holder (322) on which the trimming tool (320) is arranged and movably guided, in particular in a horizontal direction (H) and/or a vertical direction (V).

15. Method for manufacturing a round root component (200) of a wind turbine rotor blade (110), the method comprising the following steps:
- providing a trimming device (300) according to any one of the preceding claims,
- providing a prefabricated round root component (200),
- mounting the round root component (200) on the rotatable table (308) of the trimming device (300),
- rotating the table (308) with the round root component (200), thereby trimming the round root component at its periphery (204) with the trimming tool (320).
